# EUROPÄISCHE PATENTSCHRIFT

(11) **EP 4 229 745 B1**
(45) Veröffentlichungstag und Bekanntmachung des Hinweises auf die Patenterteilung: **01.05.2024**
(21) Anmeldenummer: 21791347.4
(22) Anmeldetag: 13.10.2021
(51) Int. Cl.: H02N 2/02, H02N 2/04, H02N 2/10, H02N 2/00

(54) **STELLVORRICHTUNG UND VERFAHREN ZU DEREN MONTAGE**
POSITIONING DEVICE AND METHOD FOR ASSEMBLY THEREOF
ACTIONNEUR ET METHODE DE SON INSTALLATION

(30) Priorität: 13.10.2020 DE 102020126863
(43) Veröffentlichungstag der Anmeldung: 23.08.2023
(73) Patentinhaber: Physik Instrumente (PI) GmbH & Co. KG, 76228 Karlsruhe (DE)
(72) Erfinder: BOCSKAI, Dominik, 76473 Iffezheim (DE)
(74) Vertreter: Keller Schneider Patentanwaltsgesellschaft mbH
(86) Internationale Anmeldenummer: PCT/EP2021/078375
(87) Internationale Veröffentlichungsnummer: WO 2022/079132

(56) Entgegenhaltungen:
- WO-A1-2006/000118
- WO-A1-2017/158017
- US-A1- 2009 243 435

## Beschreibung

Die Erfindung bezieht sich auf eine Stellvorrichtung und auf ein Verfahren zu deren Montage.

Die WO 2006/000118 A1 offenbart einen Läufer mit einer Lagereinrichtung, die den Läufer entlang einer Antriebsrichtung bewegbar lagert, eine Kopplungseinrichtung und eine Spanneinrichtung, wobei die Kopplungseinrichtung eine Verbindungsvorrichtung aufweist, die an dem Läufer befestigt ist und wobei die Spanneinrichtung in einem Freigabezustand einen Bewegungsspielraum zwischen einem Verbindungsabschnitt der Verbindungsvorrichtung und dem Läufer zur Einrichtung eines Montagezustands der Stellvorrichtung zulässt und in einem Spannzustand den Verbindungsabschnitt und den Läufer in der Antriebsrichtung starr koppelt.

Die WO 2017/158017 A1 offenbart einen piezoelektrischen Sehreitantrieb, wobei Antriebsvorrichtungen, die spiegelsymmetrisch zueinanderstehen, zwischen sich einen Läufer aufnehmen.

Die US 2009/243435 A1 zeigt einen elektromechanischen Motor mit einem Stator, einer Antriebseinheit, Läuferelemente und federelastische Verbindungselemente.

Die Anmelderin entwickelt und vertreibt lineare sowie rotatorische Stellvorrichtungen, bei denen ein Läufer mittels einer mit diesem in Reibkontakt gelangenden Antriebsvorrichtung in Bewegung gesetzt wird, wobei der Läufer seinerseits mit einem Schlitten oder einer Plattform verbunden ist, an welchem bzw. welcher ein Nutzer das durch die Stellvorrichtung zu positionierende Element anbringen kann. Bei solchen Stellvorrichtungen ist es vorteilhaft, wenn die Reib- oder Friktionskontaktfläche zwischen Läufer und Antriebsvorrichtung bereits von Anfang an, d.h. noch bevor es aufgrund von Einlaufeffekten zu einer gegenseitigen Anpassung der Kontaktflächen der Reibpartner führen, möglichst groß und daneben zeitlich unveränderlich ist. Dadurch können größere und insbesondere gleichmäßigere Antriebskräfte auf den Läufer übertragen werden, so dass günstigstenfalls eine einfachere und schnellere Regelung sowie eine höhere Genauigkeit der Stellvorrichtung möglich ist.

Um die zum gegenseitigen Kontakt vorgesehenen Flächen von Läufer und Antriebsvorrichtung in dieser Hinsicht zu optimieren, ist ein hoher Fertigungsaufwand notwendig. Jedoch selbst wenn dadurch ein idealer Reibkontakt im unmontierten Zustand realisierbar ist, ergibt sich durch die Montage der Stellvorrichtung in der Regel eine von der idealen Lage bzw. Ausrichtung von Läufer und Antriebsvorrichtung zueinander abweichende und somit wieder ungünstigere Lage bzw. Ausrichtung.

Zur Vermeidung bzw. Abmilderung der vorstehend skizzierten Situation kann vorgesehen sein, dass die Antriebsvorrichtung oder der Läufer, oder aber die Lagerung des Läufers, derart ausgeführt ist, dass eine gewisse Beweglichkeit, etwa Verschiebbarkeit oder Verkippbarkeit oder Verschwenkbarkeit, von Antriebsvorrichtung und/oder Läufer gegeben ist, die eine optimierte gegenseitige Ausrichtung der Kontaktflächen erlaubt. Eine bevorzugte Möglichkeit hierzu besteht darin, die Lagerung des Läufers, welche dessen geführte Bewegung in bzw. entlang der Antriebsrichtung ermöglicht, so auszuführen, dass eine Verschwenkbarkeit des Läufers um eine zu der Antriebsrichtung parallele Achse gewährleistet ist. Dies kann etwa durch eine Lagerung bzw. Führung realisiert sein, bei welcher der Läufer mit einer ersten Linearführungsschiene verbunden ist, und eine damit zusammenwirkende zweite Linearführungsschiene mit einem ortsfesten Teil oder Element der Stellvorrichtung verbunden ist. Jede der Linearführungsschienen weist eine V-Nut auf, in welcher Wälzkörper in Form von Kugeln gelegen sind. Die Eingriffsverhältnisse zwischen den Kugeln und den V-Nuten erlauben hierbei den gewünschten rotatorischen Freiheitsgrad des Läufers, so dass eine optimierte Ausrichtung des Läufers gegenüber der Antriebsvorrichtung gewährleistet ist.

Die vorstehend beschriebene Lagerung des Läufers zur Ermöglichung dessen optimierter Ausrichtung gegenüber der Antriebsvorrichtung bringt jedoch u.a. folgenden Nachteil mit sich: da das die Stellbewegung realisierende Abtriebselement, etwa ein Schlitten oder eine Plattform, insbesondere bei Hochpräzisions-Stellvorrichtungen in der Regel über eine Führungsvorrichtung entlang der Stellbewegungsrichtung geführt ist, und der Läufer zur Übertragung seiner durch die Antriebsvorrichtung hervorgerufenen Bewegung auf das Abtriebselement fest mit diesem verbunden ist, führt bereits eine nur geringfügige Verkippung des Läufers zu mechanischen Verspannungen der Stellvorrichtungselemente zueinander, die sich negativ auf den Betrieb bzw. die Performance der Stellvorrichtung auswirken können. Die mechanischen Verspannungen können beispielsweise dazu führen, dass ungewollte Kräfte in die Führungsvorrichtung eingeleitet werden, was insbesondere bei hochgenau ausgeführten Führungsvorrichtungen nachteilig ist und deren Genauigkeit bzw. Wiederholbarkeit negativ beeinflusst und außerdem zu erhöhtem Verschleiß führen kann.

Aufgabe der Erfindung ist, eine zu der bekannten Stellvorrichtung alternativ realisierte Stellvorrichtung bereitzustellen.

Insbesondere ist es Aufgabe der Erfindung, eine Stellvorrichtung bereitzustellen, welche die vorstehend aufgeführten Nachteile von aus dem Stand der Technik bekannten Stellvorrichtungen überwindet.

Diese Aufgabe wird jeweils gelöst durch eine Stellvorrichtung gemäß Anspruch 1 und durch ein entsprechendes Verfahren zur Montage der Stellvorrichtung. Die auf diese Ansprüche jeweils rückbezogenen Unteransprüche beschreiben jeweils zumindest vorteilhafte Weiterbildungen bzw. Verbesserungen.

Die erfindungsgemäße Stellvorrichtung umfasst einen ortsfesten Stator, einen relativ zu dem Stator zu bewegenden und durch eine Lagereinrichtung gelagerten Läufer, eine den Läufer antreibende Antriebseinheit, ein Abtriebselement, beispielsweise in Form eines Schlittens oder einer Plattform, eine Führungseinrichtung zur geführten Lagerung des Abtriebselements gegenüber dem Stator in einer Antriebsrichtung, und eine Kopplungseinrichtung. Die Kopplungseinrichtung umfasst ein Verbindungselement oder Verbindungsabschnitt zur insbesondere in Antriebsrichtung hochsteifen Verbindung des Abtriebselements mit dem Läufer, die im operationellen Zustand der Stellvorrichtung zumindest eine rotatorische Relativbewegung zwischen dem Abtriebselement und dem Läufer, insbesondere um eine Achse, die parallel zur Antriebsrichtung verläuft, erlaubt.

Durch die Verbindung des Läufers mit dem Abtriebselement über das Verbindungselement oder den Verbindungsabschnitt der Kopplungseinrichtung, die im Spannzustand oder im operationellen Zustand der Stellvorrichtung in bzw. entlang der Antriebs- bzw. Stellrichtung hochsteif ist, gelingt eine direkte und spielfreie Übertragung der Bewegung des Läufers auf das Abtriebselement, während der rotatorische Freiheitsgrad, den der Verbindungsabschnitt relativ zum Läufer oder zum Abtriebselement zulässt, eine gegenseitige Verschwenkung oder Verkippung von Läufer und Abtriebselement gewährleistet, so dass sich das Abtriebselement unabhängig von der Ausrichtung des Läufers ausrichten lässt. Somit lässt sich das Abtriebselement mit einer an dem Stator angeordneten Führungsvorrichtung, etwa zwei parallel zueinander angeordneten Linearlagern, fest verbinden, ohne dass sich die durch die Verbindung ergebende Ausrichtung des Abtriebselements auf die Ausrichtung des Läufers auswirkt. Mit anderen Worten erlaubt der rotatorische Freiheitsgrad eine unabhängige Ausrichtung bzw. Lage von Läufer und Abtriebselement, so dass eine einmal realisierte optimierte Ausrichtung zwischen Läufer und Antriebseinheit durch die Ausrichtung bzw. die Befestigung des Abtriebselements nicht negativ beeinflusst wird.

Nach der Erfindung ist insbesondere eine Stellvorrichtung vorgesehen, die aufweist: einen Stator (2), ein Abtriebselement (6), eine Führungseinrichtung (7), die im operationellen Zustand der Stellvorrichtung (1) eine geführte Lagerung des Abtriebselements (6) gegenüber dem Stator (2) in einer Antriebsrichtung bereitstellt, einen Läufer (4), eine Lagereinrichtung (3), die den Läufer (4) relativ zu dem Stator (2) entlang der Antriebsrichtung bewegbar lagert, eine den Läufer (4) antreibende Antriebseinheit (5), eine Kopplungseinrichtung (8) und eine Spanneinrichtung (83),
wobei die Kopplungseinrichtung (8) eine Verbindungsvorrichtung (80) aufweist, die an dem Abtriebselement (6) oder dem Läufer (4) befestigt ist, ,
wobei die Spanneinrichtung (83) in einem Freigabezustand einen Bewegungsspielraum zwischen einem Verbindungsabschnitt (89) der Verbindungsvorrichtung (80) und entweder dem Läufer (4) oder dem Abtriebselement (6) zur Einrichtung eines Montagezustands der Stellvorrichtung (1) zulässt und in einem Spannzustand den Verbindungsabschnitt (89) und entweder den Läufer (4) oder das Abtriebselement (6) in der Antriebsrichtung starr koppelt und
dabei eine rotatorische Relativbewegung um eine entlang der Antriebsrichtung verlaufende Rotationsachse zwischen dem Abtriebselement (6) und dem Läufer (4) erlaubt.

Bei jeder der hierin beschriebenen erfindungsgemäßen Ausführungsformen der Stellvorrichtung kann zusätzlich oder zu funktionsähnlichen Merkmalskombinationen ersatzweise vorgesehen sein, dass die Verbindungsvorrichtung (80) einen Basisabschnitt (88), der an dem Abtriebselement (6) befestigt ist, und einen Verbindungsabschnitt (89), der mit dem Basisabschnitt (88) verbunden ist, aufweist, und dass die Spanneinrichtung (83) in einem Freigabezustand einen Bewegungsspielraum zwischen dem Verbindungsabschnitt (89) und dem Läufer (4) zur Einrichtung eines Montagezustands der Stellvorrichtung (1) zulässt und in einem Spannzustand den Verbindungsabschnitt (89) und den Läufer (4) in der Antriebsrichtung starr koppelt und dabei eine rotatorische Relativbewegung um eine entlang der Antriebsrichtung verlaufende Rotationsachse zwischen dem Abtriebselement (6) und dem Läufer (4) erlaubt.

Bei diesen erfindungsgemäßen Ausführungsformen der Stellvorrichtung kann vorgesehen sein,
dass der Verbindungsabschnitt (89) in eine Ausnehmung (40) des Läufers (4) ragt,
dass die Spanneinrichtung (83) im oder am Läufer (4) ausgebildet ist,
dass die Spanneinrichtung (83) in dem Freigabezustand einen Bewegungsspielraum des Verbindungsabschnitts (89) in der Ausnehmung (40) des Läufers (4) zulässt,
dass im operationellen Zustand der Stellvorrichtung (1) die Spanneinrichtung (83) den Verbindungsabschnitt (89) gegen eine der Spanneinrichtung (83) zugewandte Anlagefläche (40a) der Ausnehmung (40) des Läufers (4) drückt und dadurch den Läufer (4) in der Antriebsrichtung starr mit dem Abtriebselement (6) koppelt, wobei eine rotatorische Relativbewegung um eine entlang der Antriebsrichtung verlaufende Rotationsachse zwischen dem Abtriebselement (6) und dem Läufer (4) zugelassen ist.

Dabei kann insbesondere vorgesehen sein, dass der Verbindungsabschnitt (809) wenigstens einen federelastischen Abschnitt (82) aufweist. Dieser federelastische Abschnitt (82) kann einstückig mit dem Verbindungsabschnitt (89) ausgebildet sein.

Bei jeder der hierin beschriebenen erfindungsgemäßen Ausführungsformen der Stellvorrichtung, insbesondere bei denen der Basisabschnitt (88) an dem Abtriebselement (6) befestigt ist, kann zusätzlich oder zu funktionsähnlichen Merkmalskombinationen ersatzweise vorgesehen sein, dass der Verbindungsabschnitt (89) auf der der Spanneinrichtung (83) zugewandten Seite einen ersten Lagerabschnitt (821a) aufweist, wobei ein jeweiliges Lagerungselement (81) in dem ersten Lagerabschnitt (821a) gelagert ist und wobei im Spannzustand die Spanneinrichtung (83) das Lagerungselement gegen den Verbindungsabschnitt (89) drückt und dabei eine Relativdrehung bzw. -rotation zwischen dem jeweiligen Lagerungselement und der Spanneinrichtung (83) zulässt.

Bei jeder der hierin beschriebenen erfindungsgemäßen Ausführungsformen der Stellvorrichtung, insbesondere bei denen der Basisabschnitt (88) an dem Abtriebselement (6) befestigt ist, kann zusätzlich oder zu funktionsähnlichen Merkmalskombinationen ersatzweise vorgesehen sein, dass der Verbindungsabschnitt (89) des Läufers (4) auf der der Spanneinrichtung (83) abgewandten Seite einen zweiten Lagerabschnitt (822a) aufweist, wobei ein jeweiliges Lagerungselement (81) in dem zweiten Lagerabschnitt (822a) gelagert ist und wobei im Spannzustand die Spanneinrichtung (83) den Verbindungsabschnitt (89) gegen das zweite Lagerungselement und dieses gegen die Anlagefläche (40a) der Ausnehmung (40) drückt und dabei eine Relativdrehung bzw. -rotation zwischen dem jeweiligen Lagerungselement und dem Verbindungsabschnitt (89) des Läufers (4) zulässt.

Bei den erfindungsgemäßen Ausführungsformen der Stellvorrichtung mit einem Lagerabschnitt kann insbesondere vorgesehen sein, dass das jeweilige der Lagerungselemente (81a, 81b) als ein zumindest abschnittsweise sphärisch geformtes Lagerungselement ausgebildet ist. Dabei kann insbesondere vorgesehen sein, dass der jeweilige Lagerabschnitt (821a, 822a) derart geformt ist, dass dieser bezüglich des sphärisch geformten Abschnitts des Lagerungselements (81) selbstzentrierend wirkt.

Bei jeder der hierin beschriebenen erfindungsgemäßen Ausführungsformen der Stellvorrichtung, insbesondere bei denen der Basisabschnitt (88) an dem Abtriebselement (6) befestigt ist, kann insbesondere vorgesehen sein, dass der Verbindungsabschnitt (89) zwei gegenüberliegend und beabstandet zueinander angeordnete federelastische Abschnitte (821, 822) aufweist und in einem zwischen den beiden federelastischen Abschnitten (821, 822) gelegenen Zwischenraum (82a) des Verbindungsabschnitts (89) ein Klemmelement (84) angeordnet ist, gegen welches die beiden federelastischen Abschnitte (82) mittels der Lagerungselemente (81) vorgespannt sind, so dass im operationellen Zustand der Stellvorrichtung (1) die Spanneinrichtung (83) die federelastischen Abschnitte (821, 822) mit dem Klemmelement (84) gegen die Anlagefläche (40a) der Ausnehmung (40) des Läufers (4) drückt und dadurch den Läufer (4) in der Antriebsrichtung starr mit dem Abtriebselement (6) koppelt.

Dabei kann insbesondere vorgesehen sein, dass das Material des Klemmelements (84) einen zu dem Material des Verbindungselements (80) unterschiedlichen thermischen Ausdehnungskoeffizienten aufweist.

Nach weiteren erfindungsgemäßen Ausführungsformen der Stellvorrichtung kann vorgesehen sein, dass der Basisabschnitt (88) am Abtriebselement (6) oder am Läufer (4) befestigt ist, wobei die Spanneinrichtung (83) zwischen dem Basisabschnitt (88) und dem Verbindungsabschnitt (89) wirkt, wobei die Spanneinrichtung (83) in dem Freigabezustand einen Bewegungsspielraum zwischen dem Basisabschnitt (88) und dem Verbindungsabschnitt (89) zulässt und in dem Spannzustand den Verbindungsabschnitt (89) von dem Basisabschnitt (88) aus gegen ein Befestigungsteil (85) des Läufers (4) und dieses gegen das Abtriebselement (6) drückt.

Bei jeder der hierin beschriebenen erfindungsgemäßen Ausführungsformen der Stellvorrichtung, insbesondere bei denen der Basisabschnitt (88) an dem Abtriebselement (6) befestigt ist und die Spanneinrichtung (83) zwischen dem Basisabschnitt (88) und dem Verbindungsabschnitt (89) wirkt, kann insbesondere vorgesehen sein, dass der Basisabschnitt (88) und der Verbindungsabschnitt (89) in der Antriebsrichtung federnd aneinander gelagert sind. Dies kann jedoch auch vorgesehen sein, wenn der Basisabschnitt (88) am Läufer (4) befestigt ist.

Bei diesen Ausführungsformen kann insbesondere vorgesehen sein, dass der Basisabschnitt (88) und der Verbindungsabschnitt (89) eine Festkörperanordnung mit einem zwischen dem Basisabschnitt (88) und dem Verbindungsabschnitt (89) gelegenen Festkörpergelenk bilden.

Bei jeder der hierin beschriebenen erfindungsgemäßen Ausführungsformen der Stellvorrichtung, insbesondere bei denen der Basisabschnitt (88) an dem Abtriebselement (6) oder am Läufer (4) befestigt ist und die Spanneinrichtung (83) zwischen dem Basisabschnitt (88) und dem Verbindungsabschnitt (89) wirkt, kann insbesondere vorgesehen sein, dass zwischen dem Befestigungsteil (85) des Läufers (4) und dem Verbindungsabschnitt (89) ein erstes Lagerungselement (81a) gelegen ist und wobei zwischen dem Befestigungsteil (85) des Läufers (4) und dem Abtriebselement (6) ein zweites Lagerungselement (81b) gelegen ist, so dass im Spannzustand die Lagerungselemente (81a, 81b) ein Drehgelenk (90) zur Bereitstellung der rotatorischen Relativbewegung um eine entlang der Antriebsrichtung verlaufende Rotationsachse zwischen dem Abtriebselement (6) und dem Läufer (4) ausbilden.

Bei diesen Ausführungsformen kann insbesondere vorgesehen sein, dass das jeweilige der Lagerungselemente (81a, 81b) jeweils als ein zumindest abschnittsweise sphärisch geformtes Lagerungselement ausgebildet ist.

Bei jeder der hierin beschriebenen erfindungsgemäßen Ausführungsformen der Stellvorrichtung, insbesondere bei denen der Basisabschnitt (88) an dem Abtriebselement (6) oder am Läufer (4) befestigt ist und die Spanneinrichtung (83) zwischen dem Basisabschnitt (88) und dem Verbindungsabschnitt (89) wirkt, kann insbesondere vorgesehen sein, dass das Befestigungsteil (85) des Läufers (4) auf der der Spanneinrichtung (83) zugewandten Seite einen ersten Lagerabschnitt (80a) aufweist, wobei ein jeweiliges Lagerungselement in dem ersten Lagerabschnitt gelagert ist und wobei im Spannzustand die Spanneinrichtung (83) das erste Lagerungselement gegen das Befestigungsteil (85) drückt und dabei eine Relativdrehung zwischen dem jeweiligen Lagerungselement und der Spanneinrichtung (83) zulässt.

Bei jeder der hierin beschriebenen erfindungsgemäßen Ausführungsformen der Stellvorrichtung, insbesondere bei denen der Basisabschnitt (88) an dem Abtriebselement (6) oder am Läufer (4) befestigt ist und die Spanneinrichtung (83) zwischen dem Basisabschnitt (88) und dem Verbindungsabschnitt (89) wirkt, kann insbesondere vorgesehen sein, dass das Befestigungsteil (85) des Läufers (4) auf der der Spanneinrichtung (83) abgewandten Seite einen zweiten Lagerabschnitt aufweist, wobei ein jeweiliges Lagerungselement in dem zweiten Lagerabschnitt (85a) gelagert ist und wobei im Spannzustand die Spanneinrichtung (83) das Befestigungsteil (85) gegen das zweite Lagerungselement und dieses gegen das Abtriebselement (6) drückt und dabei eine Relativdrehung bzw. -rotation zwischen dem jeweiligen Lagerungselement und dem Befestigungsteil (85) zulässt.

Bei diesen erfindungsgemäßen Ausführungsformen der Stellvorrichtung mit zumindest einem Lagerabschnitt kann insbesondere vorgesehen sein, dass der jeweilige Lagerabschnitt (80a, 85a) derart geformt ist, dass dieser bezüglich des sphärisch geformten Abschnitts des Lagerungselements (81) selbstzentrierend wirkt.

Bei jeder der hierin beschriebenen erfindungsgemäßen Ausführungsformen der Stellvorrichtung kann zusätzlich oder zu funktionsähnlichen Merkmalskombinationen ersatzweise vorgesehen sein, dass der Stator (2) zusammen mit dem Abtriebselement (6) einen Hohlraum bildet, innerhalb welchem die Antriebseinheit (5) angeordnet ist.

Bei jeder der hierin beschriebenen erfindungsgemäßen Ausführungsformen der Stellvorrichtung kann zusätzlich oder zu funktionsähnlichen Merkmalskombinationen ersatzweise vorgesehen sein, dass die Antriebseinheit (5) ein elektromechanisches Element aufweist.

Bei jeder der hierin beschriebenen erfindungsgemäßen Ausführungsformen der Stellvorrichtung kann zusätzlich oder zu funktionsähnlichen Merkmalskombinationen ersatzweise vorgesehen sein, dass die Lagereinrichtung (3) gebildet ist durch eine Antriebseinheit (5), wobei der Läufer zwischen zwei gegenüberliegend angeordneten Antriebseinheiten (5) gelegen ist.

Es kann von Vorteil sein, wenn die Kopplungseinrichtung wenigstens ein und bevorzugt zwei zumindest abschnittsweise sphärisch geformte/s Lagerungselement/e aufweist. Über die zumindest abschnittsweise sphärische Form des Lagerungselements bzw. der Lagerungselemente, welche/s bevorzugt als Teilkugel oder Kugel ausgebildet sind/ist, kann auf einfache Weise eine Lagerung mit einem rotatorischen Freiheitsgrad erzielt werden. Insbesondere ein als Kugel ausgeführtes Lagerungselement ist in vielen Größen, Qualitäten und Materialien einfach und vergleichsweise kostengünstig verfügbar. Zudem muss ein kugelförmiges Lagerungselement nicht ausgerichtet werden. Über das sphärisch geformte Lagerungselement ist es zudem möglich, mittels eines Punktkontakts zu einem das Lagerungselement abstützenden Element oder Teil der Stellvorrichtung störende Kraftkomponenten, insbesondere in von der Antriebs- bzw. Stellrichtung abweichenden Richtungen, zu vermeiden bzw. stark zu reduzieren.

Es kann zudem von Vorteil sein, wenn das Verbindungselement wenigstens einen Lagerabschnitt aufweist, der zur Aufnahme bzw. Lagerung eines Lagerungselements vorgesehen ist. Hierbei kann es insbesondere von Vorteil sein, wenn der Lagerabschnitt derart geformt ist, dass er bezüglich des sphärisch geformten Abschnitts des Lagerungselements selbstzentrierend wirkt. Dies erlaubt eine äußerst einfache Montage der Stellvorrichtung, da sich das Lagerungselement bei Kontakt mit dem Lagerabschnitt und insbesondere beim Anpressen gegen den Lagerabschnitt, selbst und ohne weitere Maßnahme ausrichtet bzw. positioniert. Durch die Zentrierung kann bewirkt werden, dass ungewünschte Kontakte der Lagerungselemente mit anderen Elementen bzw. Teilen der Stellvorrichtung vermieden werden, welche zu ungewollten Krafteinleitungen führen können. Weiterhin führt die Zentrierung in der Regel zu einem kreisförmigen und damit großflächigeren Kontakt als bei einem Punktkontakt, welcher eine höhere Steifigkeit besitzt.

Ebenso kann es von Vorteil sein, wenn die Verbindungsvorrichtung wenigstens einen federelastischen Abschnitt aufweist. Der federelastische Abschnitt der Verbindungsvorrichtung erlaubt auf einfache Weise einen Ausgleich von Maßtoleranzen, etwa aufgrund von Fertigungs- bzw. Montageungenauigkeiten und/oder thermischer Ausdehnung. Hierbei kann es insbesondere von Vorteil sein, wenn jeder federelastische Abschnitt einstückig oder integral mit der Verbindungsvorrichtung ausgebildet ist. Dies erlaubt aufgrund der Reduzierung der Einzelteile eine besonders einfache Montage der Stellvorrichtung. Zudem resultiert über die einstückige Verbindung der federelastischen Abschnitte mit der Verbindungsvorrichtung oder dem Basisabschnitt derselben ein Festkörpergelenk, welches prinzipiell keinen Verschleiß und nur eine geringe innere Reibung aufweist.

Ferner kann es von Vorteil sein, wenn wenigstens ein Lagerungselement mit Hilfe einer Spanneinrichtung direkt oder indirekt gegen den Lagerabschnitt gedrückt ist. Dadurch ist es auf einfache Weise möglich, das entsprechende Lagerungselement mit einer definierten Kraft gegen den Lagerabschnitt zu drücken bzw. pressen.

Es kann von Vorteil sein, wenn der Lagerabschnitt in dem federelastischen Abschnitt ausgebildet ist. Dadurch gelingt eine integrale Lösung zur Ausbildung des Lagerabschnitts, und durch die entsprechend verringerte Anzahl von Teilen der Stellvorrichtung gelingt eine schnellere sowie einfachere Montage.

Ebenso kann es von Vorteil sein, wenn die Verbindungsvorrichtung oder der Verbindungsabschnitt zwei gegenüberliegend und beabstandet zueinander angeordnete federelastische Abschnitte aufweist und in einem zwischen den beiden federelastischen Abschnitten gelegenen Zwischenraum des Verbindungselements ein Klemmelement angeordnet ist, gegen welches die federelastischen Abschnitte mittels der Lagerungselemente vorgespannt sind. Durch die beiden gegenüberliegend und beabstandet zueinander angeordneten federelastischen Abschnitte ist eine symmetrische Anordnung gegeben, die insbesondere gleiche Bedingungen entlang der Anordnungsrichtung der federelastischen Abschnitte, welche bevorzugt parallel zu der Antriebs- bzw. Stellrichtung angeordnet ist, gewährleistet. Der Begriff "federelastisch" bedeutet in diesem Zusammenhang, dass die entsprechenden Abschnitte derart ausgebildet sind, dass sie sich wie eine Feder reversibel verformen bzw. auslenken lassen, wobei durch die Verformung bzw. Auslenkung eine entsprechende Rückstellkraft hervorgerufen wird, welche die federelastischen Abschnitte in die unausgelenkte Lage bzw. Position zurück zu bewegen versucht. Dadurch, dass sich die federelastischen Abschnitte an dem Klemmelement abstützen können, ist bei entsprechendem Kontakt, welcher einer Vorspannung auf Block entspricht, eine äußerst steife Verbindung bzw. Kopplung zwischen dem Läufer und dem Abtriebselement gegeben.

Hierbei kann es insbesondere von Vorteil sein, wenn das Material des Klemmelements einen zu dem Material des Verbindungselements unterschiedlichen thermischen Ausdehnungskoeffizienten aufweist. Dadurch können ansonsten möglicherweise auftretende Spalte (Spiel) zwischen dem Klemmelement und den federelastischen Abschnitten des Verbindungsabschnitts, welche einer gewünschten spalt- bzw. spielfreien Lagerung entgegenwirken, vermieden werden.

Es kann sich als günstig erweisen, wenn die Kopplungseinrichtung oder der Läufer neben dem Verbindungsabschnitt ein separates Befestigungselement oder ein separates Befestigungsteil zur Verbindung des Läufers mit der Lagereinrichtung aufweist, wobei ein Lagerabschnitt in dem Verbindungselement und ein Lagerabschnitt in dem Befestigungsabschnitt oder dem Befestigungsteil ausgebildet ist. Hierbei kann es sich als besonders günstig erweisen, wenn die Verbindungsvorrichtung eine Festkörperanordnung mit einem parallel geführten Spannteil oder Verbindungsabschnitt umfasst, und die Spanneinrichtung eine Verspannung zwischen dem federelastischen Abschnitt und dem Spannteil ermöglicht. Hierdurch ist eine Richtung der Vorspannkraft realisierbar, welche im Wesentlichen parallel zu der Antriebsrichtung angeordnet ist.

Es kann sich zudem als günstig erweisen, wenn der Stator zusammen mit dem Abtriebselement einen Hohlraum bildet, innerhalb welchem die Antriebseinheit angeordnet ist. Dadurch gelingt ein äußerst kompakter Antrieb, wobei die Kompaktheit noch weiter erhöht werden kann, indem innerhalb des Hohlraums auch elektronische Teile oder Komponenten zur Steuerung bzw. Regelung der Stellvorrichtung angeordnet sind. Hierunter fallen etwa Sensoren, Controller oder Treiber.

Ferner kann es sich als günstig erweisen, wenn die Antriebseinheit ein elektromechanisches Element aufweist. Elektromechanische Elemente zeigen unter Einfluss einer elektrischen Spannung bzw. eines elektrischen Feldes eine Dimensionsänderungen, die zum Antrieb des Läufers und damit des Abtriebselements nutzbar sind. Hierunter fallen etwa Elemente aus piezoelektrischen oder elektrostriktiven Materialien, die bei an ihnen angelegten elektrischen Spannungen etwa eine Längenänderung erfahren.

Darüber hinaus kann es sich als günstig erweisen, wenn die Lagereinrichtung selbst gebildet ist durch eine Antriebseinheit, wobei der Läufer zwischen zwei gegenüberliegend angeordneten Antriebseinheiten gelegen ist. Hierdurch kann die Antriebskraft der Stellvorrichtung erhöht werden.

Weiterhinist erfindungsgemäß vorgesehen, dass die Lagereinrichtung zumindest im Spannzustand oder operationellen Zustand den Läufer derart lagert, dass dieser einen rotatorischen Freiheitsgrad um eine Rotationsachse aufweist, welche im Wesentlichen parallel zu der Antriebsrichtung angeordnet ist. Der Begriff "im Wesentlichen" bedeutet hierbei, dass gewisse Abweichungen von der ideal parallelen Anordnung zwischen der Rotationsachse und der Antriebsrichtung möglich sind, ohne dass dadurch eine signifikante Veränderung und insbesondere Verschlechterung resultiert. Insbesondere sind hierunter Abweichungen von +/-5° von der Parallelität zu verstehen. Durch den rotatorischen Freiheitsgrad kann auf einfache Weise eine gegenseitige optimierte Ausrichtung zwischen dem Läufer und der Antriebseinheit realisiert werden, wobei etwa durch gegenseitiges Anpressen von Läufer und Antriebseinheit der rotatorische Freiheitsgrad eine Verkippung bzw. Verschwenkung des Läufers gegenüber der Antriebseinheit bewirkt.

Ein Verfahren zur Montage der vorstehend ausgeführten Stellvorrichtung umfasst die folgenden Schritte, die vorzugsweise nacheinander und gemäß aufsteigender Nummerierung durchzuführen sind:
Schritt: Befestigen der Lagereinrichtung bzw. eines Teils der Lagereinrichtung und der Führungseinrichtung an dem Stator
Schritt: Verbinden des Läufers mit der Lagereinrichtung bzw. mit einem Teil der Lagereinrichtung
Schritt: Gegenseitiges Ausrichten von Läufer und Antriebseinheit
Schritt: Befestigen der Antriebseinheit an dem Stator
Schritt: Befestigen des Abtriebselements an der Führungseinrichtung
Schritt: Verbinden des Abtriebselements mit dem Läufer mittels der Kopplungseinrichtung.

Ein solches Montageverfahren erlaubt die gegenseitige feste Verbindung von Läufer und Abtriebselement erst beim letzten Montageschritt, so dass zuvor ein freies und von der Antriebseinheit unabhängiges Verschieben des Abtriebselements möglich ist. Auf diese Weise kann ohne Kopplung mit der Antriebseinheit eine Prüfung bzw. Justierung der Stellvorrichtung hinsichtlich ihrer Führungsgenauigkeit und Führungsgüte über den gesamten Stellweg bzw. Hub vorgenommen werden, und erst mit dem letzten Montageschritt die Kopplung mit dem Läufer vorgenommen werden, wobei sich diese Kopplung nicht negativ auf die in einem vorhergehenden Montageschritt durchgeführte optimierte Ausrichtung des Läufers zu der Antriebseinheit auswirkt.

Im Folgenden werden Ausführungsformen der Erfindung anhand von Figuren beschrieben, die zeigen:
Fig. 1: Perspektivische Schnittdarstellung einer erfindungsgemäßen Stellvorrichtung,
Fig. 2: Perspektivische Darstellung der Stellvorrichtung nach Fig. 1 mit entferntem Abtriebselement,
Fig. 3: Schnittdarstellung der Stellvorrichtung nach Fig. 2,
Fig. 4: Vergrößerter Ausschnitt aus der Schnittdarstellung gemäß Fig. 3,
Fig. 5: Vergrößerter Ausschnitt aus der Schnittdarstellung gemäß Fig. 4,
Fig. 6: Schnittdarstellung eines Bereichs einer erfindungsgemäßen Stellvorrichtung mit einer weiteren Ausführungsform der Kopplungseinrichtung,
Fig. 7: Draufsicht von oben auf eine weitere Ausführungsform einer Kopplungsvorrichtung einer erfindungsgemäßen Stellvorrichtung, die funktional der in der Fig. 6 dargestellten Stellvorrichtung entspricht.

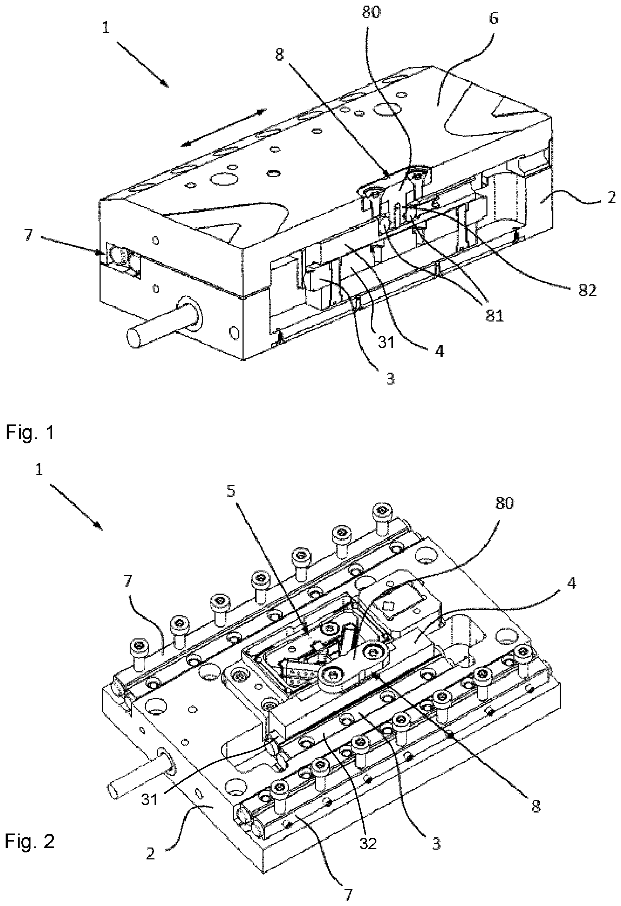

Fig. 1 zeigt in perspektivischer Darstellung den Schnitt durch eine Ausführungsform der erfindungsgemäßen Stellvorrichtung 1 in Form eines Lineartisches. Diese weist einen Stator 2 auf, gegenüber dem relativ das Abtriebselement 6 in Form eines Tisches oder Schlittens linear in bzw. entlang einer Stellrichtung (in Fig. 1 durch einen entsprechenden Doppelpfeil charakterisiert) bewegbar ist, wobei eine definierte und insbesondere hochgenaue Verstellung bzw. Positionierung des Tischs bzw. des Schlittens beabsichtigt ist. Hierzu ist der Tisch bzw. Schlitten über eine Führungseinrichtung 7 in Form von zwei parallel zueinander angeordneten Linearlagern mit dem Stator 2 verbunden und dadurch linear beweglich gelagert. Zum Antrieb des Tisches bzw. Schlittens in bzw. entlang der Stellrichtung dient eine innerhalb der Stellvorrichtung angeordnete und in Fig. 1 nicht erkennbare Antriebseinheit, welche fest mit dem Stator 2 verbunden ist und in Friktionskontakt mit einem langgestreckten Läufer 4 steht bzw. gelangt. Der Läufer 4 ist seinerseits mittels einer Lagereinrichtung 3 entlang einer Antriebsrichtung linear gelagert bzw. geführt, wobei die Antriebsrichtung im Wesentlichen mit der Stellrichtung zusammenfällt. Bei den dargestellten Ausführungsformen ist die Lagereinrichtung 3 aus einer ersten Linearführungsschiene 31, die an dem Läufer 4 fixiert ist, und einer zweiten Linearführungsschiene 32, die an dem an dem Stator 2 fixiert ist, gebildet, wobei sich die Linearführungsschienen 31, 32 im operationellen Zustand der Stellvorrichtung 1 bei Betätigung des Läufers 4 aneinander bewegen können.

Die Stellvorrichtung 1 weist eine Kopplungseinrichtung 8 mit einer Verbindungsvorrichtung 80 und einer Spanneinrichtung 83 zur starren Kopplung von Läufer 4 und Abtriebselement 6 in der Antriebsrichtung mittels einer Spanneinrichtung 83 in einem Spannzustand auf, wobei eine rotatorische Relativbewegung um eine entlang der Antriebsrichtung verlaufende Rotationsachse zwischen dem Abtriebselement 6 und dem Läufer 4 als Freiheitsgrad diese Kopplung zugelassen ist. Die Kopplungseinrichtung 8 oder Verbindungsvorrichtung 80 weist hierzu einen Basisabschnitt 88 und einen Verbindungsabschnitt 89 auf, die zusammen als ein Stück (Figuren 1 bis 7) oder als zueinander separate und aneinander befestigte Teile gebildet sein können. Weiterhin erlaubt die Spanneinrichtung 83 in einem Freigabezustand einen Bewegungsspielraum zwischen dem Verbindungsabschnitt 89 und entweder dem Läufer 4 oder dem Abtriebselement 6 zur Einrichtung eines Montagezustands der Stellvorrichtung 1 t.

Bei den Darstellungen der Figuren 1 bis 7 weist die Verbindungsvorrichtung 80 einen Basisabschnitt 88, der an dem Abtriebselement 6 befestigt ist, und einen Verbindungsabschnitt 89, der mit dem Basisabschnitt 88 verbunden ist, auf. Dabei lässt die Spanneinrichtung 83 in einem Freigabezustand einen Bewegungsspielraum zwischen dem Verbindungsabschnitt 89 und dem Läufer 4 zur Einrichtung eines Montagezustands der Stellvorrichtung 1 zu und koppelt in einem Spannzustand den Verbindungsabschnitt 89 und den Läufer 4 in der Antriebsrichtung starr und erlaubt dabei eine rotatorische Relativbewegung um eine entlang der Antriebsrichtung verlaufende Rotationsachse zwischen dem Abtriebselement 6 und dem Läufer 4.

Alternativ dazu kann bei anderen Realisierungen, die nicht in den Figuren 1 bis 7 gezeigt sind, der Basisabschnitt 88 an dem Läufer 4 befestigt sein und kann der Verbindungsabschnitt 89, der mit dem Basisabschnitt 88 verbunden ist, derart mechanisch mit dem Abtriebselement 6 zusammenwirken, dass die Spanneinrichtung 83 in einem Freigabezustand einen Bewegungsspielraum zwischen dem Verbindungsabschnitt 89 und dem Abtriebselement 6 zur Einrichtung eines Montagezustands der Stellvorrichtung 1 zulässt und in einem Spannzustand den Verbindungsabschnitt 89 und das Abtriebselement 6 in der Antriebsrichtung starr koppelt und dabei eine rotatorische Relativbewegung um eine entlang der Antriebsrichtung verlaufende Rotationsachse zwischen dem Abtriebselement 6 und dem Läufer 4 erlaubt. Dabei kann insbesondere die Spanneinrichtung im oder am Abtriebselement 6 angeordnet oder befestigt sein.

Die Spanneinrichtung 83 kann, wie in den Figuren dargestellt, generell durch ein Betätigungsteil wie etwa eine Schraube oder ein Bolzen realisiert sein, das in einer Öffnung oder Bohrung des Läufers 4 oder des Abtriebselement 6 in Positionen zwischen dem Freigabezustand, bei dem ein Spiel oder Abstand zwischen dem Betätigungsteil und dem Verbindungsabschnitt 89 besteht, und dem Spannzustand, bei dem das Betätigungsteil auf den Verbindungsabschnitt 89 drückt, bewegbar oder einstellbar sein.

Somit kann über die Verbindungsvorrichtung 80 der Läufer 4 mit dem Abtriebselement 6 in der Antriebsrichtung starr gekoppelt werden, wobei die Kopplungseinrichtung 8 zumindest in bzw. entlang der Antriebs- oder der Stellrichtung insbesondere eine hochsteife Ankopplung zwischen Läufer 4 und Abtriebselement 6 gewährleisten kann. Bei den Darstellungen der Figuren 1 bis 7 ist der Verbindungsabschnitt 89 des Verbindungselements 80 mittels Schrauben fest mit dem Abtriebselement 6 verbunden.

Bei der Ausführungsform der Figuren 1 bis 7 ist der Verbindungsabschnitt 89 durch zwei federelastische Abschnitte 82 oder 821, 822 gebildet, die in eine Ausnehmung 40 des Läufers 4 ragen, wobei zwischen den federelastischen Abschnitten 82 und den Flächen, die die Ausnehmung 40 des Läufers 4 in bzw. entlang der Antriebs- oder Stellrichtung begrenzen, Lagerungselemente 81 oder 821a bzw. 822a jeweils in Form von Kugeln angeordnet sind. Alternativ dazu kann der Verbindungsabschnitt 89 als nur einzelner federelastischer Abschnitt 82 realisiert sein. Generell kann die Stellvorrichtung 1 auch ohne Lagerungselemente ausgeführt sein.

Fig. 2 zeigt die Stellvorrichtung 1 gemäß Fig. 1 in einer perspektivischen und ungeschnittenen Darstellung von oben mit entferntem Abtriebselement. Anhand dieser Darstellung sind die beiden Linearführungen der Führungseinrichtung 7 zu erkennen sowie die Lagereinrichtung 3 zur Lagerung bzw. Führung des Läufers 4. Hierbei weist der Läufer 4 eine nutförmige Ausnehmung auf, in welcher ein Abschnitt des linear beweglichen Teils der Lagereinrichtung 3 aufgenommen ist. Weiterhin zu erkennen ist die Antriebseinheit 5, welche paarweise V-förmig zueinander angeordnete und säulenförmige piezoelektrische Elemente umfasst, wobei an den jeweils aufeinander zulaufenden Enden eines Paares von piezoelektrischen Elementen ein in Fig. 2 nicht erkennbares Reibelement angeordnet ist, welches zum Friktionskontakt mit dem Läufer 4 bzw. mit einer an dem Läufer 4 angeordneten Friktionsschicht oder mit einem an dem Läufer 4 angeordneten Friktionselement vorgesehen ist.

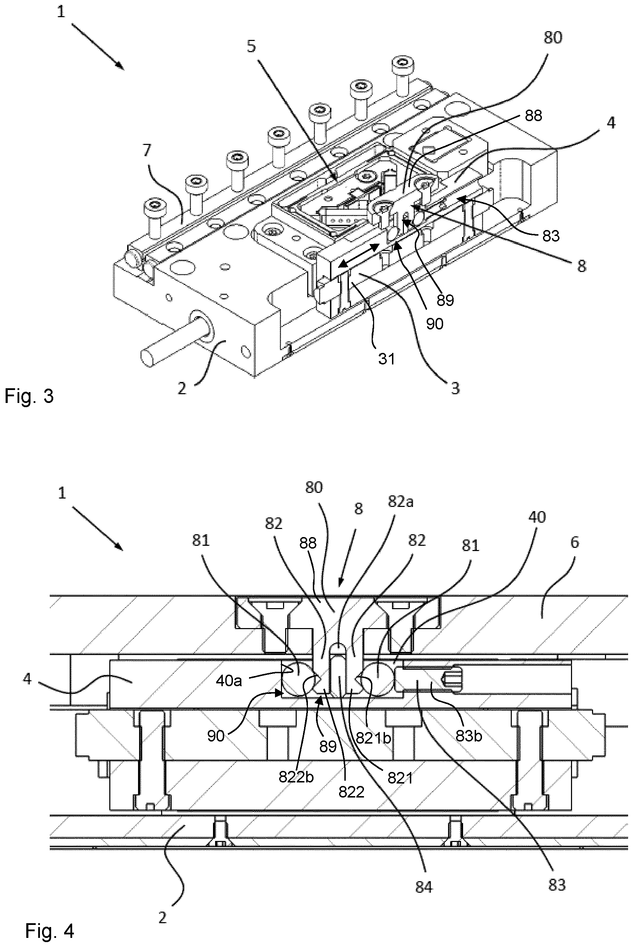

Fig. 3 zeigt anhand eines parallel zu der Führungseinrichtung 7 ausgeführten Schnitts bezüglich der Darstellung von Fig. 2 insbesondere weitere Details der Stellvorrichtung 1 nach den Figuren 1 bis 5 zur Anordnung des Läufers 4 an der Lagereinrichtung 3.

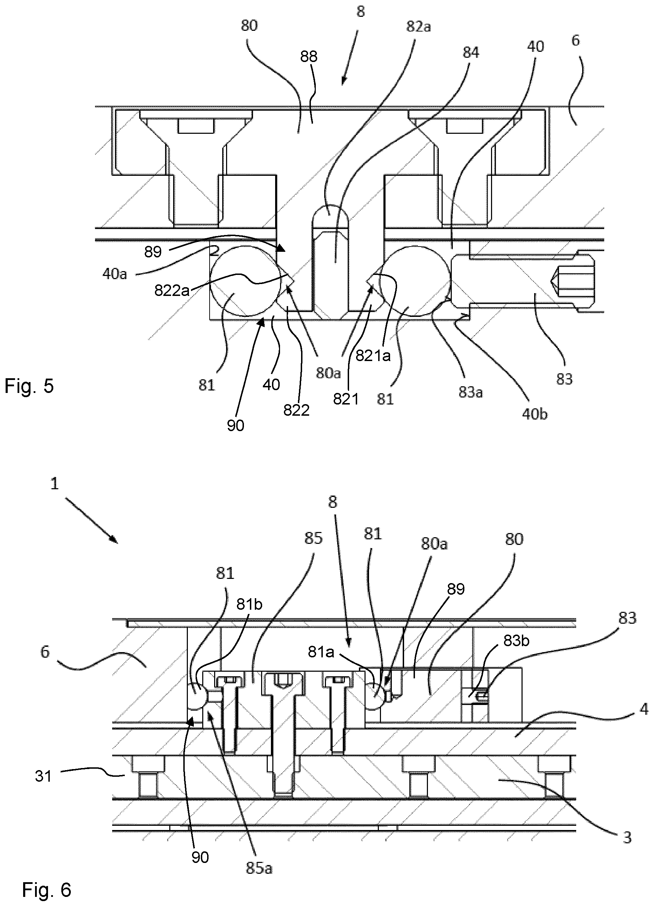

Fig. 4 stellt einen vergrößerten Ausschnitt des Schnitts gemäß Fig. 3 um den Bereich der Kopplungseinrichtung 8 herum dar, während Fig. 5 einen diesbezüglich nochmals vergrößerten Ausschnitt repräsentiert. Die Verbindungsvorrichtung 80, die als ein einstückiges Verbindungselement ausgeführt ist, weist im Querschnitt eine T-ähnliche Form auf, wobei der in Blickrichtung auf die Darstellung waagerecht angeordnete Schenkel, also der Basisabschnitt 88,mittels einer Verschraubung eine feste Verbindung desselben mit dem Abtriebselement 6 realisiert, während der in Blickrichtung zu diesem sich senkrecht erstreckende Verbindungsabschnitt 88 der Verbindungsvorrichtung 80 die zwei einstückig oder integral mit diesem ausgeführten und bezüglich der Antriebs- oder Stellrichtung gegenüberliegend und beabstandet zueinander angeordnete federelastische Abschnitte 82 oder 821, 822 aufweist, welche teilweise in die Ausnehmung 40, die in dem Läufer 4 ausgebildet ist, ragen. In einem Zwischenraum 82a, der zwischen den beiden zueinander beabstandeten federelastischen Abschnitte 82 gelegen und durch diese in der Antriebsrichtung begrenzt ist, ist ein Klemmelement 84 gelegen, welches in Kontakt mit den federelastischen Abschnitten 821, 822 steht. An jeder der dem Klemmelement 84 abgewandten Seite des jeweiligen federelastischen Abschnitts 82 oder 821, 822 ist in diesem jeweils eine im Querschnitt V-förmige Ausnehmung ausgebildet, welche einen Lagerabschnitt 80a oder 821a bzw. 822a zur Aufnahme des jeweils zugehörigen Lagerungselements 81 insbesondere in Form einer Kugel (Figur 4) oder Halbkugel bildet. Der jeweilige Lagerabschnitt 80a hat eine Konusform, so dass sich das Lagerungselement 81 oder eine sphärische Oberfläche desselben an dem Lagerabschnitt 80a über einen ringförmigen Flächenkontakt abstützt.

Die Konusform des jeweiligen Lagerabschnitts 80a sorgt im Zusammenspiel mit einem sphärischen Oberflächenbereich der Lagerungselemente 81 für eine Selbstzentrierung der Lagerungselemente 81 bei einem Anpressen bzw. Andrücken eines Lagerungselements 81 gegen den entsprechenden Lagerabschnitt 80a. Auf diese Weise kann vorgesehen sein, dass alleine durch das Anpressen bzw. Andrücken der Lagerungselemente 81 gegen die Lagerabschnitte 80a deren Abheben von dem Boden der Ausnehmung 40 innerhalb des Läufers 4 erfolgt. Bei einer kugelförmigen Ausbildung der Lagerungselemente 81 können sich diese auf der dem federelastischen Abschnitt 82 abgewandten Seite über einen Punktkontakt an einer ebenen Fläche der Ausnehmung bzw. des Betätigungsteils der Spanneinrichtung 83 abstützen, und sich an dem Lagerabschnitt 80a über einen ringförmigen Flächenkonkakt abstützen. Die ebene Abstützfläche für das in Fig. 4 bzw. Fig. 5 in Blickrichtung auf die Darstellung linke Lagerungselement 81 ist gebildet durch eine Seitenwand 40a der Ausnehmung 40, während die ebene Abstützfläche für das in Fig. 4 bzw. Fig. 5 in Blickrichtung auf die Darstellung rechte Lagerungselement 81 gebildet ist durch die ebene Fläche 83a des Betätigungsteils 83b der Spanneinrichtung 83. Somit werden über die Lagerungselemente 81 keine ungewünschten Kräfte mit einer von der Antriebs- bzw. Stellrichtung abweichenden Richtung eingeleitet. Zudem gewährleistet diese Art der Halterung bzw. Lagerung der Lagerungselemente den gewünschten rotatorischen Freiheitsgrad, der eine gegenseitige Verkippung bzw. Verschwenkung zwischen dem Läufer 4 und der Kopplungseinrichtung 8 bzw. dem damit verbundenen Abtriebselement 6 erlaubt.

Das Anpressen bzw. Andrücken der Lagerungselemente 81 gegen die in den federelastischen Abschnitten 82 ausgebildeten Lagerabschnitten 80a oder 821a bzw. 822a wird realisiert über die Spanneinrichtung 83 mit dem Betätigungsteil 83b, insbesondere wie dargestellt in Form einer Schraube, deren ebene Endfläche an dem in Blickrichtung auf die Darstellung der Fig. 4 bzw. Fig. 5 rechten Lagerungselement 81 angreift und dieses aufgrund einer entsprechenden Spannkraft in einer Richtung auf den zugehörigen federelastischen Abschnitt 82 zu drückt. Dadurch drückt das in Fig. 4 bzw. Fig. 5 rechte Lagerungselement 81 auf den zugehörigen und in Fig. 4 bzw. Fig. 5 rechten federelastischen Abschnitt 82 und lenkt diesen in entsprechender Richtung, d.h. nach links, aus. Dadurch kommt der in Fig. 4 bzw. Fig. 5 rechte federelastische Abschnitt 82 in Kontakt mit dem Klemmelement 84 bzw. drückt gegen dieses, so dass es in Kontakt mit dem in Fig. 4 bzw. Fig. 5 linken federelastischen Abschnitt 82 gelangt, und die durch die Spanneinrichtung 83 hervorgerufene Spannkraft auf diesen weiterleitet. Da zwischen dem in Fig. 4 bzw. Fig. 5 linken federelastischen Abschnitt 82 und dem Läufer 4 ein Lagerungselement 81 angeordnet ist, wird dieses aufgrund der Spannkraft zwischen der Seitenwand 40a und diesem federelastischen Abschnitt eingeklemmt, und die entsprechende Gegenkraft sorgt für ein Anliegen des in Fig. 4 bzw. Fig. 5 linken federelastischen Abschnitts 82 an dem Klemmelement 84. Somit befinden sich beide federelastischen Abschnitte 82 sowohl in Kontakt mit dem Klemmelement 84, als auch mit dem jeweiligen Lagerungselement 81, worüber eine steife Ankopplung der Kopplungseinrichtung 8 bzw. des damit fest verbundenen Abtriebselements 6 an dem Läufer 4 resultiert.

Der zumindest eine Abschnitt 82 muss nicht jeweils federelastisch sein, sondern kann auch starr realisiert sein.

Zur entsprechenden Montage werden zunächst die Lagerungselemente 81 in die Ausnehmung 40 derart eingelegt, dass sie sich in der Nähe der beiden Seitenwände 40a, 40b der Ausnehmung 40 des Läufers 4 befinden. Sodann wird das Abtriebselement 6 entlang der Antriebs- bzw. Stellvorrichtung verschoben, bis sich dessen Ausnehmung zur Aufnahme der Verbindungsvorrichtung 80 oder des Verbindungsabschnitts 89 im Bereich der Ausnehmung 40 des Läufers 4 befindet. Dann wird der Verbindungsabschnitt 89 zusammen mit dem zwischen den beiden federelastischen Abschnitten 82 und in dem Zwischenraum 82a eingesetzten Klemmelement 84 in die Ausnehmung des Abtriebselements 6 derart eingesetzt, dass die elastischen Federabschnitte 82 zwischen den beiden Lagerungselementen 81 angeordnet sind. Dies ist dadurch ermöglicht bzw. wird dadurch erleichtert, dass das Abtriebselement 6 entlang der Stellrichtung frei verfahrbar bzw. bewegbar ist. In der weiteren Folge wird der Verbindungsabschnitts 89 und somit die Verbindungsvorrichtung 80 durch Verschraubung mit dem Abtriebselement 6 verbunden. Schließlich wird das Betätigungsteil oder die Schraube der Spanneinrichtung 83 angezogen und in den Spannzustand gebracht, so dass die ebene Spanneinrichtungsfläche 83a in Kontakt mit dem in Fig. 4 bzw. Fig. 5 rechten Lagerungslement 81 kommt und beim weiteren Anziehen der Schraube eine Spannkraft ausgeübt wird, welche die Lagerungselemente 81, die federelastischen Abschnitte 82 und das Klemmelement 84 gegeneinander verspannt, wobei diese jeweils aneinander anliegen, so dass ein Kontakt auf Block realisiert ist, welcher eine sehr steife Ankopplung von Läufer 4 und Abtriebselement 6 in bzw. entlang der Antriebs- oder Stellrichtung gewährleistet, während gleichzeitig ein rotatorischer Freiheitsgrad zur gegenseitigen Verkippung bzw. Verschwenkung von Läufer und Abtriebselement gegeben ist. Es ist in Abweichung zu der vorstehend skizzierten Abfolge von Montageschritten dankbar, zuerst die Schraube der Spanneinrichtung 83 anzuziehen, und erst danach die Verbindung des Abtriebselements 6 und des Verbindungsabschnitts 89 oder der Verbindungsvorrichtung 80 zu realisieren.

Bei den anhand der Figuren 1 bis 7 beschriebenen Ausführungsformen ragt generell der Verbindungsabschnitt 89 in eine Ausnehmung 40 des Läufers 4, wobei die Spanneinrichtung 83 im oder am Läufer 4 ausgebildet ist. Auch lässt generell die Spanneinrichtung 83 in dem Freigabezustand einen Bewegungsspielraum des Verbindungsabschnitts 89 in der Ausnehmung 40 des Läufers 4 zu, wobei im operationellen Zustand der Stellvorrichtung 1 die Spanneinrichtung 83 den Verbindungsabschnitt 89 gegen eine der Spanneinrichtung 83 zugewandte Anlagefläche 40a der Ausnehmung 40 des Läufers 4 drückt und dadurch den Läufer 4 in der Antriebsrichtung starr mit dem Abtriebselement 6 koppelt, wobei eine rotatorische Relativbewegung um eine entlang der Antriebsrichtung verlaufende Rotationsachse zwischen dem Abtriebselement 6 und dem Läufer 4 zugelassen ist.

Fig. 6 zeigt eine weitere Ausführungsform der erfindungsgemäßen Stellvorrichtung mit einer gegenüber den Figuren 1 bis 5 andersartig ausgebildeten Kopplungseinrichtung 8. Diese weist neben der Verbindungsvorrichtung 80 ein separat vorliegendes Befestigungsteil 85 auf, das an dem Läufer 4 befestigt ist und somit als Teil des Läufers 4 angesehen werden kann. Das Befestigungsteil 85 und der Läufer 4 können zusammen auch als ein Stück, also als einteiliger Läufer 4, realisiert sein.

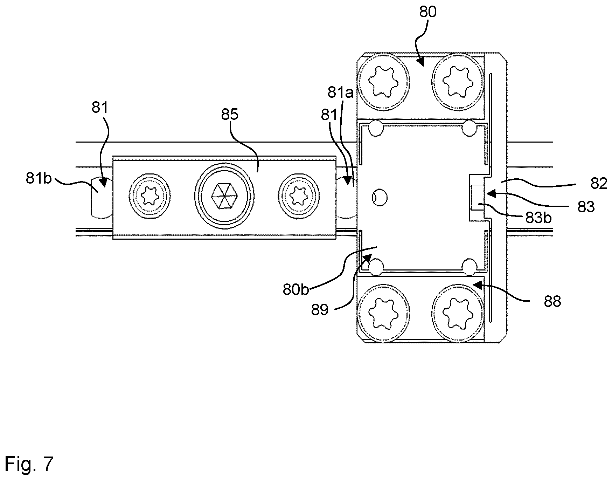

Bei den Ausführungsformen, die hierin anhand der Figuren 6 und 7 beschrieben sind, ist generell vorgesehen, dass der Basisabschnitt 88 am Abtriebselement 6 oder am Läufer 4 befestigt ist. Bei den in den Figuren 6 und 7 dargestellten Ausführungsformen der Stellvorrichtung 1 ist der Basisabschnitt 88 am Abtriebselement 6 befestigt. Bei jeder dieser Ausführungsformen wirkt die Spanneinrichtung 83 zwischen dem Basisabschnitt 88 und dem Verbindungsabschnitt 89, wobei die Spanneinrichtung 83 in dem Freigabezustand einen Bewegungsspielraum zwischen dem Basisabschnitt 88 und dem Verbindungsabschnitt 89 zulässt und in dem Spannzustand den Verbindungsabschnitt 89 von dem Basisabschnitt 88 aus gegen ein Befestigungsteil 85 des Läufers 4 und dieses gegen das Abtriebselement 6 drückt. Bei dazu alternativen Realisierungen kann der Basisabschnitt 88 auch am Läufer 4 befestigt und können die weiteren Komponenten in analoger Weise realisiert sein.

Bei den Ausführungsformen der Figuren 6 und 7 sind der Basisabschnitt 88 und der Verbindungsabschnitt 89 in der Antriebsrichtung federnd aneinander gelagert.

Konkret ist bei der Ausführungsform der Figur 6 einerseits ein Lagerungselement 81 (das in Fig. 6 rechte Lagerungselement) zwischen der Verbindungsvorrichtung 80 und insbesondere dem Verbindungsabschnitt 89 desselben und dem Befestigungsteil 85 angeordnet, und andererseits ist ein Lagerungselement 81 (das in Fig. 6 linke Lagerungselement) zwischen dem Befestigungsteil 85 und einer Innenwandfläche des Abtriebselements 6 angeordnet. Eine derartige Ausführungsform der Kopplungsvorrichtung 8 ist nicht so kompakt wie die gemäß den Figuren 1 bis 5, jedoch kann diese montagetechnische Vorteile bringen. Insbesondere kann so eine einfachere Zugänglichkeit des federelastischen Abschnitts realisiert werden. Bei Verwendung von Lagerungselementen, die von einer Kugelform abweichen, etwa bei angeschliffenen und dadurch abgeflachten Kugeln, ist durch eine solche Ausführungsform der Kopplungseinrichtung eine einfachere Ausrichtung der Lagerungselemente möglich.

Das Befestigungsteil 85 der Kopplungseinrichtung 8 ist im Wesentlichen starr ausgebildet und dient insbesondere der Verbindung zwischen dem Läufer 4 und der Lagereinrichtung 3. An der in Blickrichtung auf die Darstellung der Fig. 6 linken Seite des Befestigungsteils 85 liegt an dessen eine Selbstzentrierung hervorrufenden Lagerabschnitt 85a ein Lagerungselement 81 mit seinem kugelförmigen Abschnitt an, während sich dessen abgeflachter Abschnitt an einer ebenen Fläche des Abtriebselement 6 abstützt. Das Befestigungsteil 85 ist mittels Schrauben einerseits mit dem Läufer 4 und andererseits mit der Lagereinrichtung 3 verbunden. An der in Blickrichtung auf die Darstellung der Fig. 6 rechten Seite des Befestigungsteils 85 liegt an der dort gelegenen ebenen Seitenfläche das andere Lagerungselement 81 mit seinem komplementär geformten abgeflachten Abschnitt an. Der kugelförmige Abschnitt des in Fig. 6 rechten Lagerungselements 81 ist gelagert in dem komplementär geformten und eine Selbstzentrierung hervorrufenden Lagerabschnitt 80a des Verbindungselements 80. Das Verbindungselement 80 ist dabei mit dem Läufer 4, als auch mit dem Abtriebselement 6 verbunden.

Fig. 7 verdeutlicht in einer Draufsicht von oben den Aufbau der Verbindungsvorrichtung 80 aus Fig. 6, die aus dem Basisabschnitt (88) und dem Verbindungsabschnitt 89 gebildet ist, wobei der Basisabschnitt 88 und der Verbindungsabschnitt 89 relativ zueinander bewegbar sind, insbesondere gegen die Wirkung einer Federvorrichtung, hier in Form von Festkörpergelenken, die zwischen dem Basisabschnitt 88 und dem Verbindungsabschnitt 89 angeordnet sind. Der Verbindungsabschnitt 89 ist als ein Spannteil 80b ausgebildet, welches über Festkörpergelenke mit dem restlichen Teil des Verbindungselements 80, also dem Basisabschnitt 88, verbunden ist. Die Festkörpergelenke sind dabei so ausgebildet, dass im Falle des Einwirkens einer Spannkraft mittels der Spanneinrichtung 83 diese im Wesentlichen in bzw. entlang der Antriebs- oder Stellrichtung wirkt. Die Spanneinrichtung 83 umfasst hierbei ein Betätigungsteil in Form einer Schraube, die in ein in dem Basisabschnitt 88, hier in Form eines federelastischen Abschnitts 82 der Verbindungsvorrichtung 80, ausgebildeten Gewinde eingedreht ist und mit ihrer Schraubenendfläche gegen das Spannteil 80b drückt, so dass das Spannteil 80b in Richtung auf das Befestigungsteil 85 zu gedrückt ist. An der der Spanneinrichtung 83 gegenüberliegend angeordneten Seite des Spannteils 80b liegt an dem Lagerabschnitt 80a das in Fig. 7 linke Lagerungselement 81 mit seinem sphärisch ausgebildeten Abschnitt an und drückt dieses in Richtung auf das Befestigungsteil 85 zu, so dass dieses in Richtung auf das andere Lagerungselement 81 zu gedrückt ist, welches sich seinerseits mit der abgeflachten Seite an einer Innenwandfläche des Abtriebselements 6 abstützt (in Fig. 7 nicht zu erkennen) und gleichzeitig dessen sphärisch ausgebildeter Abschnitt mittels des komplementär geformten Lagerabschnitts 85a gelagert ist. Somit werden das Verbindungselement 80 bzw. dessen Spannteil 80b, die Lagerungselemente 81 und das Befestigungsteil 85 gegeneinander verspannt bzw. gedrückt und ein Kontakt auf Block realisiert, der eine in Antriebs- bzw. Stellrichtung steife Kopplung zwischen dem Läufer 4 und dem Abtriebselement 6 gewährleistet. Allerdings ist bei der Realisierung der Stellvorrichtung gemäß Fig. 6 die Steifigkeit entlang der Antriebs- bzw. Stellrichtung nach links größer als nach rechts, da sich bei einem Antrieb bzw. einer Verstellung nach rechts die vergleichsweise hohe Elastizität des federelastischen Abschnitts 82 bemerkbar macht. In Fig. 7 ist in entsprechender Weise bei einem Antrieb bzw. einer Verstellung nach rechts die Steifigkeit der Kopplung höher als bei einem Antrieb bzw. einer Verstellung nach links.

Generell ist bei den anhand der Figuren 6 und 7 dargestellten Ausführungsformen als Optionen zwischen dem Befestigungsteil 85 des Läufers 4 und dem Verbindungsabschnitt 89 ein erstes Lagerungselement 81a gelegen und zwischen dem Befestigungsteil 85 des Läufers 4 und dem Abtriebselement 6 ein zweites Lagerungselement 81b gelegen, so dass im Spannzustand die Lagerungselemente 81a, 81b ein Drehgelenk 90 zur Bereitstellung der rotatorischen Relativbewegung um eine entlang der Antriebsrichtung verlaufende Rotationsachse zwischen dem Abtriebselement 6 und dem Läufer 4 ausbilden. Alternativ weisen diese Ausführungsformen nur eines der Lagerungselemente 81a, 81b oder keines der Lagerungselemente 81a, 81b auf, so dass im Spannzustand das Betätigungsteil 83b direkt auf das Verbindungsabschnitt 89 drückt, wodurch dieses direkt auf das Befestigungsteil 85 gedrückt und dieses wiederum direkt auf das Abtriebselement 6 gedrückt wird.

Weiterhin sind bei diesen Ausführungsformen als Optionen das jeweilige der Lagerungselemente 81a, 81b jeweils als ein zumindest abschnittsweise sphärisch geformtes Lagerungselement ausgebildet.

Weiterhin weist bei diesen Ausführungsformen als Optionen das Befestigungsteil 85 des Läufers 4 auf der der Spanneinrichtung 83 zugewandten Seite einen ersten Lagerabschnitt 80a auf, wobei ein jeweiliges Lagerungselement in dem ersten Lagerabschnitt gelagert ist und wobei im Spannzustand die Spanneinrichtung 83 das erste Lagerungselement gegen das Befestigungsteil 85 drückt und dabei eine Relativdrehung zwischen dem jeweiligen Lagerungselement und der Spanneinrichtung 83 zulässt.

Weiterhin weist bei diesen Ausführungsformen als Optionen das Befestigungsteil 85 des Läufers 4 auf der der Spanneinrichtung 83 abgewandten Seite einen zweiten Lagerabschnitt auf, wobei ein jeweiliges Lagerungselement in dem zweiten Lagerabschnitt 85a gelagert ist und wobei im Spannzustand die Spanneinrichtung (83) das Befestigungsteil 85 gegen das zweite Lagerungselement und dieses gegen das Abtriebselement 6 drückt und dabei eine Relativdrehung zwischen dem jeweiligen Lagerungselement und dem Befestigungsteil 85 zulässt.

Insbesondere können der jeweilige Lagerabschnitt 80a, 85a derart geformt sein, dass dieser bezüglich des sphärisch geformten Abschnitts des Lagerungselements 81 selbstzentrierend wirkt.

Obwohl in den Figuren stets Stellvorrichtungen mit einem linearen Stellweg gezeigt sind, ist die Erfindung nicht auf lineare Stellvorrichtungen beschränkt; es sind auch rotatorische bzw. Rotationsstellvorrichtungen denkbar, bei welchen der Rotor eine Drehung bzw. eine Rotation als Stellbewegung ausführt.

### Bezugszeichenliste:

- 1: Stellvorrichtung
- 2: Stator
- 3: Lagereinrichtung
- 4: Läufer
- 5: Antriebseinheit
- 6: Abtriebselement
- 7: Führungseinrichtung
- 8: Kopplungseinrichtung
- 40: Ausnehmung (des Läufers 4)
- 40a: Seitenwand (der Ausnehmung 40)
- 40b: Seitenwand (der Ausnehmung 40)
- 80: Verbindungsvorrichtung (der Kopplungseinrichtung 8)
- 80a, 821a, 822a: Lagerabschnitt (der Verbindungsvorrichtung 80)
- 80b: Spannteil (des Verbindungselements 80)
- 81: Lagerungselement (der Kopplungseinrichtung 8)
- 82, 821, 822: federelastischer Abschnitt (der Kopplungseinrichtung 8)
- 82a: Zwischenraum
- 83: Spanneinrichtung (der Kopplungseinrichtung 8)
- 83a: Spanneinrichtungsfläche
- 83b: Betätigungsteil
- 84: Klemmelement (der Kopplungseinrichtung)
- 85: Befestigungsteil zur starren Kopplung
- 85a: Lagerabschnitt (des Befestigungselements)
- 88: Basisabschnitt
- 89: Verbindungsabschnitt
- 90: Drehgelenk

## Patentansprüche

1. Stellvorrichtung (1) mit einem Stator (2), mit einem Abtriebselement (6), mit einer Führungseinrichtung (7), die derart ausgebildet ist,
dass sie im operationellen Zustand der Stellvorrichtung (1)
das Abtriebselement (6) gegenüber dem Stator (2) in einer Antriebsrichtung geführt lagert, mit einem Läufer (4), mit einer Lagereinrichtung (3), auf der der Läufer (4) relativ zu dem Stator (2) entlang der Antriebsrichtung bewegbar gelagert ist, mit einer Antriebseinheit (5) zum Antreiben des Läufers (4), mit einer Kopplungseinrichtung (8) und mit einer Spanneinrichtung (83),
wobei die Kopplungseinrichtung (8) eine Verbindungsvorrichtung (80) aufweist, die an dem Abtriebselement (6) oder dem Läufer (4) befestigt ist,
wobei die Spanneinrichtung (83) derart ausgebildet ist, dass sie in einem Freigabezustand einen Bewegungsspielraum zwischen einem Verbindungsabschnitt (89) der Verbindungsvorrichtung (80) und entweder dem Läufer (4) oder dem Abtriebselement (6) zur Einrichtung eines Montagezustands der Stellvorrichtung (1) bereitstellt und in einem Spannzustand eine starre Kopplung zwischen dem Verbindungsabschnitt (89) und entweder dem Läufer (4) oder dem Abtriebselement (6) in der Antriebsrichtung besteht und dabei eine rotatorische Relativbewegung um eine entlang der Antriebsrichtung verlaufende Rotationsachse zwischen dem Abtriebselement (6) und dem Läufer (4) zugelassen ist.

2. Stellvorrichtung (1) nach Anspruch 1,
wobei die Verbindungsvorrichtung (80) einen Basisabschnitt (88) aufweist, der an dem Abtriebselement (6) befestigt und mit dem Verbindungsabschnitt (89), verbunden ist,
wobei die Spanneinrichtung (83) derart ausgebildet ist, dass sie in einem Freigabezustand einen Bewegungsspielraum zwischen dem Verbindungsabschnitt (89) und dem Läufer (4) zur Einrichtung eines Montagezustands der Stellvorrichtung (1) bereitstellt und in einem Spannzustand eine starre Kopplung zwischen dem Verbindungsabschnitt (89) und dem Läufer (4) in der Antriebsrichtung besteht und dabei eine rotatorische Relativbewegung um eine entlang der Antriebsrichtung verlaufende Rotationsachse zwischen dem Abtriebselement (6) und dem Läufer (4) zugelassen ist.

3. Stellvorrichtung (1) nach Anspruch 2,
wobei der Verbindungsabschnitt (89) in eine Ausnehmung (40) des Läufers (4) ragt,
wobei die Spanneinrichtung (83) im oder am Läufer (4) ausgebildet ist,
wobei die Spanneinrichtung (83) derart ausgebildet ist, dass sie in dem Freigabezustand einen Bewegungsspielraum des Verbindungsabschnitts (89) in der Ausnehmung (40) des Läufers (4) zulässt,
wobei die Spanneinrichtung (83) derart ausgebildet ist, dass sie im operationellen Zustand der Stellvorrichtung (1) den Verbindungsabschnitt (89) gegen eine der Spanneinrichtung (83) zugewandte Anlagefläche (40a) der Ausnehmung (40) des Läufers (4) drückt und dadurch eine starre Kopplung zwischen dem Läufer (4) in der Antriebsrichtung mit dem Abtriebselement (6) besteht, wobei eine rotatorische Relativbewegung um eine entlang der Antriebsrichtung verlaufende Rotationsachse zwischen dem Abtriebselement (6) und dem Läufer (4) zugelassen ist.

4. Stellvorrichtung (1) nach einem der Ansprüche 2 oder 3, wobei der Verbindungsabschnitt (89) auf der der Spanneinrichtung (83) zugewandten Seite einen ersten Lagerabschnitt (821a) aufweist, wobei ein jeweiliges Lagerungselement (81) in dem ersten Lagerabschnitt (821a) gelagert ist und wobei die Spanneinrichtung (83) derart ausgebildet ist, dass sie im Spannzustand das Lagerungselement gegen den Verbindungsabschnitt (89) drückt und dabei eine Relativdrehung zwischen dem jeweiligen Lagerungselement und der Spanneinrichtung (83) zugelassen ist.

5. Stellvorrichtung (1) nach einem der Ansprüche 2 bis 4, wobei der Verbindungsabschnitt (89) des Läufers (4) auf der der Spanneinrichtung (83) abgewandten Seite einen zweiten Lagerabschnitt (822a) aufweist, wobei ein jeweiliges Lagerungselement (81) in dem zweiten Lagerabschnitt (822a) gelagert ist und wobei die Spanneinrichtung (83) derart ausgebildet ist, dass sie im Spannzustand den Verbindungsabschnitt (89) gegen das zweite Lagerungselement und dieses gegen die Anlagefläche (40a) der Ausnehmung (40) drückt und dabei eine Relativdrehung zwischen dem jeweiligen Lagerungselement und dem Verbindungsabschnitt (89) des Läufers (4) zugelassen ist.

6. Stellvorrichtung (1) nach einem der Ansprüche 2 bis 5, wobei der Verbindungsabschnitt (89) zwei gegenüberliegend und beabstandet zueinander angeordnete federelastische Abschnitte (821, 822) aufweist und in einem zwischen den beiden federelastischen Abschnitten (821, 822) gelegenen Zwischenraum (82a) des Verbindungsabschnitts (89) ein Klemmelement (84) angeordnet ist, gegen welches die beiden federelastischen Abschnitte (82) mittels der Lagerungselemente (81) vorgespannt sind, wobei die Spanneinrichtung (83) derart ausgebildet ist, dass sie die federelastischen Abschnitte (821, 822) mit dem Klemmelement (84) gegen die Anlagefläche (40a) der Ausnehmung (40) des Läufers (4) drückt und dadurch eine starre Kopplung zwischen dem Läufer (4) in der Antriebsrichtung und dem Abtriebselement (6) besteht.

7. Stellvorrichtung (1) nach Anspruch 2, wobei der Basisabschnitt (88) am Abtriebselement (6) oder am Läufer (4) befestigt ist, wobei die Spanneinrichtung (83) derart ausgebildet ist, dass sie zwischen dem Basisabschnitt (88) und dem Verbindungsabschnitt (89) wirksam ist, wobei die Spanneinrichtung (83) in dem Freigabezustand einen Bewegungsspielraum zwischen dem Basisabschnitt (88) und dem Verbindungsabschnitt (89) bereitstellt und in dem Spannzustand den Verbindungsabschnitt (89) von dem Basisabschnitt (88) aus gegen ein Befestigungsteil (85) des Läufers (4) und dieses gegen das Abtriebselement (6) drückt.

8. Stellvorrichtung (1) nach Anspruch 7, wobei der Basisabschnitt (88) und der Verbindungsabschnitt (89) in der Antriebsrichtung federnd aneinander gelagert sind.

9. Stellvorrichtung (1) nach einem der Ansprüche 7 oder 8, wobei zwischen dem Befestigungsteil (85) des Läufers (4) und dem Verbindungsabschnitt (89) ein erstes Lagerungselement (81a) gelegen ist und wobei zwischen dem Befestigungsteil (85) des Läufers (4) und dem Abtriebselement (6) ein zweites Lagerungselement (81b) gelegen ist, wobei die Lagerungselemente (81a, 81b) derart ausgebildet sind, dass sie im Spannzustand ein Drehgelenk (90) zur Bereitstellung der rotatorischen Relativbewegung um eine entlang der Antriebsrichtung verlaufende Rotationsachse zwischen dem Abtriebselement (6) und dem Läufer (4) ausbilden.

10. Stellvorrichtung (1) nach einem der Ansprüche 7 bis 9, wobei das jeweilige der Lagerungselemente (81a, 81b) jeweils als ein zumindest abschnittsweise sphärisch geformtes Lagerungselement ausgebildet sind.

11. Stellvorrichtung (1) nach einem der Ansprüche 7 bis 10, wobei das Befestigungsteil (85) des Läufers (4) auf der der Spanneinrichtung (83) zugewandten Seite einen ersten Lagerabschnitt (80a) aufweist, wobei ein jeweiliges Lagerungselement in dem ersten Lagerabschnitt gelagert ist und wobei die Spanneinrichtung (83) derart ausgebildet ist, dass sie im Spannzustand das erste Lagerungselement gegen das Befestigungsteil (85) drückt und dabei eine Relativdrehung zwischen dem jeweiligen Lagerungselement und der Spanneinrichtung (83)zugelassen ist.

12. Stellvorrichtung (1) nach einem der Ansprüche 7 bis 11, wobei das Befestigungsteil (85) des Läufers (4) auf der der Spanneinrichtung (83) abgewandten Seite einen zweiten Lagerabschnitt aufweist, wobei ein jeweiliges Lagerungselement in dem zweiten Lagerabschnitt (85a) gelagert ist und wobei die Spanneinrichtung (83) derart ausgebildet ist, dass sie im Spannzustand das Befestigungsteil (85) gegen das zweite Lagerungselement und dieses gegen das Abtriebselement (6) drückt und dabei eine Relativdrehung zwischen dem jeweiligen Lagerungselement und dem Befestigungsteil (85)zugelassen ist.

13. Stellvorrichtung nach einem der vorhergehenden Ansprüche, wobei die Antriebseinheit (5) ein elektromechanisches Element aufweist.

14. Stellvorrichtung nach einem der vorhergehenden Ansprüche, wobei die Lagereinrichtung (3) gebildet ist durch eine Antriebseinheit (5), wobei der Läufer zwischen zwei gegenüberliegend angeordneten Antriebseinheiten (5) gelegen ist.

15. Verfahren zur Montage einer Stellvorrichtung (1) nach einem der vorhergehenden Ansprüche, **gekennzeichnet durch** die Schrittabfolge:
| | |
|---|---|
| 1. Schritt: | Befestigen der Lagereinrichtung (3) und der Führungseinrichtung (7) an dem Stator (2) |
| 2. Schritt: | Verbinden des Läufers (4) mit der Lagereinrichtung (3) |
| 3. Schritt: | Gegenseitiges Ausrichten von Läufer (4) und Antriebseinheit (5) |
| 4. Schritt: | Befestigen der Antriebseinheit (5) an dem Stator (2) |
| 5. Schritt: | Befestigen des Abtriebselements (6) an der Führungseinrichtung (7) |
| 6. Schritt: | Verbinden des Abtriebselements (6) mit dem Läufer (4) mittels der Kopplungseinrichtung (8). |

## Claims

1. Adjustment device (1) which comprises a stator (2), a driven element (6), a guide device (7) which is configured such that, in the operational state of the adjustment device (1), the same provides a guided support of the driven element (6) with respect to the stator (2) in a drive direction, a slider (4), a support device (3) which movably supports the slider (4) relative to the stator (2) along the drive direction, a drive device (5) for driving the slider (4), a coupling device (8) and a clamping device (83),
wherein the coupling device (8) comprises a connection device (80) which is fastened to the driven element (6) or the slider (4),
wherein the clamping device (83) is configured such that the same provides, in a release state, a movement clearance between a connection section (89) of the connection device (80) and either the slider (4) or the driven element (6) in order to establish a mounting state of the adjustment device (1) and that the same provides, in a clamping state, a rigid coupling of the connection section (89) and either the slider (4) or the driven element (6) in the drive direction, thereby causing a rotational relative movement about a rotational axis, which runs along the drive direction, between the driven element (6) and the slider (4).

2. Adjustment device (1) according to claim 1,
wherein the connection device (80) comprises a base section (88) which is attached to the driven element (6) and connected to the connection section (89),
wherein the clamping device (83) is configured such that, in a release state, the same allows a clearance space between the connection section (89) and the slider (4) for establishing a mounting state of the adjustment device (1) and, in a clamping state, a rigid coupling of the connection section (89) and the slider (4) exists in the drive direction which thereby allows a rotational relative movement about a rotational axis, which runs along the drive direction, between the driven element (6) and the slider (4).

3. Adjustment device (1) according to claim 2,
wherein the connection section (89) projects into a recess (40) of the slider (4),
wherein the clamping device (83) is formed in or on the slider (4),
wherein the clamping device (83) is configured such that, in the release state, the same allows a movement clearance of the connection section (89) in the recess (40) of the slider (4),
wherein the clamping device (83) is configured such that the same, in the operational state of the adjustment device (1), presses the connection section (89) against a contact surface (40a) of the recess (40) of the slider (4) which faces the clamping device (83) and thereby a rigid coupling between the slider (4) and the driven element (6) in the drive direction is established, wherein a rotational relative movement about a rotational axis, which runs along the drive direction, between the driven element (6) and the slider (4) is permitted.

4. Adjustment device (1) according to one of claims 2 or 3, wherein the connection section (89), on the side facing the clamping device (83), comprises a first support section (821a), wherein a respective support element (81) is mounted on the first support section (821a) and wherein the clamping device (83) is configured such that the same, in the clamping state, presses the support element against the connection section (89), wherein thereby a relative rotation between the respective support element and the clamping device (83) is permitted.

5. Adjustment device (1) according to one of claims 2 to 4, wherein the connection section (89) of the slider (4), on the side facing away from the clamping device (83), comprises a second support section (822a), wherein a respective support element (81) is supported on the second support section (822a), and wherein the clamping device (83) is configured such that the same, in the clamping state, presses the connection section (89) against the second support element and the latter against the contact surface (40a) of the recess (40), wherein thereby a relative rotation between the respective support element and the connection section (89) of the slider (4) is permitted.

6. Adjustment device (1) according to one of claims 2 to 5, wherein the connection section (89) comprises two spring-elastic sections (821, 822) arranged opposite and spaced apart from one another and wherein a clamping element (84) is arranged in an intermediate space (82a) of the connection section (89) located between the two spring-elastic sections (821, 822), against which clamping element the two spring-elastic sections (82) are prestressed by means of the support elements (81), wherein the clamping device (83) is configured such that the same presses the spring-elastic sections (821, 822) with the clamping element (84) against the contact surface (40a) of the recess (40) of the slider (4) and wherein thereby a rigid coupling of the slider (4) and the driven element (6) is established in the drive direction.

7. Adjustment device (1) according to claim 2, wherein the base section (88) is attached to the driven element (6) or to the slider (4), wherein the clamping device (83) is configured such that the same acts between the base section (88) and the connection section (89), wherein the clamping device (83), in the release state, allows a clearance between the base section (88) and the connection section (89) and, in the clamping state, presses the connection section (89) from the base section (88) against a mounting part (85) of the slider (4) and the latter against the driven element (6).

8. Adjustment device (1) according to claim 7, wherein the base section (88) and the connection section (89) are resiliently lying against each other in the drive direction.

9. Adjustment device (1) according to one of claims 7 or 8, wherein a first support element (81a) is situated between the mounting part (85) of the slider (4) and the connection section (89) and wherein a second support element (81b) is situated between the mounting part (85) of the slider (4) and the driven element (6), wherein the support elements (81a, 81b) are configured such that the same, in the clamping state, form a pivot joint (90) for providing the rotational relative movement between the driven element (6) and the slider (4) about an axis of rotation which extends along the drive direction.

10. Adjustment device (1) according to one of claims 7 to 9, wherein the respective support elements (81a, 81b) are each designed as a support element which is spherically shaped at least in a section.

11. Adjustment device (1) according to one of claims 7 to 10, wherein the mounting part (85) of the slider (4) comprises a first support section (80a) on the side facing the clamping device (83), wherein a respective support element is supported on the first support section and wherein the clamping device (83) is configured such that the clamping device (83), in the clamping state, presses the first support element against the mounting part (85) and thereby a relative rotation between the respective support element and the clamping device (83) is permitted.

12. Adjustment device (1) according to one of claims 7 to 11, wherein the mounting part (85) of the slider (4) comprises a second support section on the side facing away from the clamping device (83), wherein a respective support element is supported on the second support section (85a), and wherein the clamping device (83) is configured such that, in the clamping state, the clamping device (83) presses the mounting part (85) against the second support element and the latter against the driven element (6) and thereby a relative rotation between the respective support element and the mounting part (85) is permitted.

13. Adjustment device according to one of the preceding claims, wherein the drive device (5) comprises an electromechanical element.

14. Adjustment device according to one of the preceding claims, wherein the support device (3) is formed by a drive device (5), wherein the slider is situated between two drive devices (5) arranged opposite one another.

15. Method for assembling an adjustment device (1) according to one of the preceding claims, **characterized by** the sequence of steps:
| | |
|---|---|
| 1. step: | mounting the support device (3) and the guide device (7) to the stator (2) |
| 2. step: | connecting the slider (4) to the support device (3) |
| 3. Step: | mutual alignment of the slider (4) and the drive device (5) |
| 4. step: | mounting the drive device (5) to the stator (2) |
| 5. step: | mounting the driven element (6) to the guide device (7) |
| 6. step: | connecting the driven element (6) to the slider (4) by means of the coupling device (8). |

## Revendications

1. Dispositif de réglage (1) avec un stator (2), avec un élément de sortie (6), avec un dispositif de guidage (7) qui est conçu de telle sorte qu'à l'état opérationnel du dispositif de réglage (1), il loge l'élément de sortie (6) de manière guidée par rapport au stator (2) dans une direction d'entraînement, avec un rotor (4), avec un dispositif de palier (3) sur lequel le rotor (4) est monté de manière mobile par rapport au stator (2) le long de la direction d'entraînement, avec une unité d'entraînement (5) pour entraîner le rotor (4), avec un dispositif de couplage (8) et avec un dispositif de tension (83),
dans lequel le dispositif de couplage (8) présente un dispositif de raccordement (80) qui est fixé à l'élément de sortie (6) ou au rotor (4),
dans lequel le dispositif de tension (83) est conçu de telle sorte, que, dans un état de relâchement, il met à disposition un espace de mouvement entre une section de raccordement (89) du dispositif de raccordement (80) et soit le rotor (4) soit l'élément de sortie (6) pour l'établissement d'un état de montage du dispositif de réglage (1) et que, dans un état de serrage, il assure un couplage rigide entre la section de raccordement (89) et soit le rotor (4) soit l'élément de sortie (6) dans la direction d'entraînement, tout en permettant un mouvement relatif de rotation autour d'un axe de rotation s'étendant le long de la direction d'entraînement entre l'élément de sortie (6) et le rotor (4).

2. Dispositif de réglage (1) selon la revendication 1,
dans lequel le dispositif de raccordement (80) comprend une section de base (88) qui est fixée à l'élément de sortie (6) et reliée à la section de raccordement (89), dans lequel le dispositif de tension (83) est conçu de telle sorte, qu'il permet, dans un état de relâchement, un espace de mouvement entre la section de raccordement (89) et le rotor (4) pour l'établissement d'un état de montage du dispositif de réglage (1) et, dans un état de serrage, il couple rigidement la section de raccordement (89) et le rotor (4) dans la direction d'entraînement, tout en permettant un mouvement relatif de rotation autour d'un axe de rotation s'étendant le long de la direction d'entraînement entre l'élément de sortie (6) et le rotor (4).

3. Dispositif de réglage (1) selon la revendication 2,
dans lequel la section de raccordement (89) fait saillie dans un évidement (40) du rotor (4), dans lequel le dispositif de tension (83) est formé dans ou sur le rotor (4),
dans lequel le dispositif de tension (83) est conçu de telle sorte qu'il permette, dans l'état de relâchement, une marge de mouvement de la section de raccordement (89) dans l'évidement (40) du rotor (4),
dans lequel le dispositif de tension (83) est conçu de telle sorte que, dans l'état opérationnel du dispositif de réglage (1), il presse la section de raccordement (89) contre une surface d'appui (40a) de l'évidement (40) du rotor (4) tournée vers le dispositif de tension (83) et couple ainsi le rotor (4) rigidement à l'élément de sortie (6) dans la direction d'entraînement, dans lequel un mouvement relatif de rotation autour d'un axe de rotation s'étendant le long de la direction d'entraînement est possible entre l'élément de sortie (6) et le rotor (4).

4. Dispositif de réglage (1) selon l'une des revendications 2 ou 3, dans lequel la section de réglage (89) présente une première section de support (821a) sur le côté tourné vers le dispositif de raccordement (83), dans lequel un élément de support (81) respectif est logé dans la première section de support (821a) et dans lequel le dispositif de raccordement (83) est conçu de telle sorte qu'il presse l'élément de support contre la section de réglage (89) à l'état de serrage et qu'une rotation relative est alors possible entre l'élément de support respectif et le dispositif de raccordement (83).

5. Dispositif de réglage (1) selon l'une des revendications 2 à 4, dans lequel la section de liaison (89) du rotor (4) présente une deuxième section de support (822a) du côté opposé au dispositif de serrage (83), dans lequel un élément de support (81) respectif est logé dans la deuxième section de support (822a) et dans lequel le dispositif de tension (83) est configuré de telle sorte, qu'à l'état de serrage, il presse la section de support (89) contre le deuxième élément de support et celui-ci contre la surface d'appui (40a) de l'évidement (40), et qu'une rotation relative est alors possible entre l'élément de support respectif et la section de raccordement (89) du rotor (4).

6. Dispositif de réglage (1) selon l'une des revendications 2 à 5, dans lequel la section de raccordement (89) comporte deux sections élastiques (821, 822) disposées en vis-à-vis et à distance l'une de l'autre, et dans un interstice (82a) de la section de raccordement (89), situé entre les deux sections élastiques (821, 822), est disposé un élément de serrage (84) contre lequel les deux sections élastiques (82) sont précontraintes au moyen des éléments de support (81),
dans lequel le dispositif de tension (83) est conçu de telle sorte qu'il presse les sections élastiques (821, 822) avec l'élément de serrage (84) contre la surface d'appui (40a) de l'évidement (40) du rotor (4) et qu'il existe ainsi un couplage rigide entre le rotor (4) dans le sens d'entraînement et l'élément de sortie.

7. Dispositif de réglage (1) selon la revendication 1, dans lequel la section de base (88) est fixée à l'élément de sortie (6) ou au rotor (4), dans lequel le dispositif de tension (83) est configuré de manière à être actif entre la section de base (88) et la section de raccordement (89), dans lequel le dispositif de tension (83), dans l'état de relâchement, fournit un espace de mouvement entre la section de base (88) et la section de raccordement (89) et, dans l'état de tension, pousse la section de raccordement (89) depuis la section de base (88) contre une partie de fixation (85) du rotor (4) et celle-ci contre l'élément de sortie (6).

8. Dispositif de réglage (1) selon la revendication 7, dans lequel la section de base (88) et la section de raccordement (89) sont montées élastiquement l'une sur l'autre dans la direction d'entraînement.

9. Dispositif de réglage (1) selon l'une des revendications 7 ou 8, dans lequel un premier élément de support (81a) est situé entre la partie de fixation (85) du rotor (4) et la section de raccordement (89) et dans lequel un deuxième élément de support (81b) est situé entre la partie de fixation (85) du rotor (4) et l'élément de sortie (6), les éléments de support (81a, 81b) étant conçus de telle sorte qu'à l'état de serrage, ils forment une articulation pivotante (90) pour fournir le mouvement relatif de rotation autour d'un axe de rotation s'étendant le long de la direction d'entraînement entre l'élément de sortie (6) et le rotor (4).

10. Dispositif de réglage (1) selon l'une des revendications 7 à 9, dans lequel chacun des éléments de support (81a, 81b) est réalisé sous la forme d'un élément de support de forme sphérique au moins par tronçons.

11. Dispositif de réglage (1) selon l'une des revendications 7 à 10, dans lequel la partie de fixation (85) du rotor (4) présente une première section de palier (80a) sur le côté tourné vers le dispositif de fixation (83), dans lequel un élément de support respectif est logé dans la première section de palier et dans lequel le dispositif de fixation (83) est conçu de telle sorte que, à l'état de serrage, il presse le premier élément de support contre la partie de fixation (85) et qu'une rotation relative est alors autorisée entre l'élément de support respectif et le dispositif de fixation (83).

12. Dispositif de réglage (1) selon l'une des revendications 7 à 11, dans lequel la partie de fixation (85) du rotor (4) présente, du côté opposé au dispositif de tension (83), une deuxième section de palier, dans lequel un élément de palier respectif est logé dans la deuxième section de palier (85a) et le dispositif de tension (83) est conçu de telle sorte que, à l'état de tension, il presse la partie de fixation (85) contre le deuxième élément de palier et celui-ci contre l'élément de sortie (6), une rotation relative étant alors autorisée entre l'élément de palier respectif et la partie de fixation (85).

13. Dispositif de réglage selon l'une quelconque des revendications précédentes, dans lequel l'unité d'entraînement (5) comprend un élément électromécanique.

14. Dispositif de réglage selon l'une quelconque des revendications précédentes, dans lequel le dispositif de palier (3) est formé par une unité d'entraînement (5), dans lequel le rotor étant situé entre deux unités d'entraînement (5) disposées en vis-à-vis.

15. Procédé de montage d'un dispositif de réglage (1) selon l'une des revendications précédentes, **caractérisé par** la succession d'étapes :
1ère étape : fixation du dispositif de palier (3) et du dispositif de guidage (7) sur le stator (2).
2ème étape : connexion du rotor (4) au dispositif de palier (3).
3e étape : alignement réciproque du rotor (4) et de l'unité d'entraînement (5) 4ème étape : fixation de l'unité d'entraînement (5) au stator (2)
5e étape : fixation de l'élément de sortie (6) au dispositif de guidage (7).
6e étape : relier l'élément de sortie (6) au rotor (4) au moyen du dispositif de couplage (8).
